(19) Europäisches Patentamt

European Patent Office

Office européen des brevets

(11) **EP 1 672 332 A2**

(12) **EUROPEAN PATENT APPLICATION**

(43) Date of publication:
**21.06.2006 Bulletin 2006/25**

(51) Int Cl.:
***G01F 19/00*** (2006.01)

(21) Application number: **05445082.0**

(22) Date of filing: **25.10.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **03.12.2004 US 3793**

(71) Applicant: **Electrolux Home Products, Inc.**
**Cleveland, OH 44135-0920 (US)**

(72) Inventor: **Watkins, Paul**
**Texarkana, Texas 75501 (US)**

(74) Representative: **Svahn, Göran et al**
**AB Electrolux**
**Group Intellectual Property**
**105 45 Stockholm (SE)**

(54) **Single use two-cycle engine oil packets and method of using them**

(57)     A fuel and oil mixing system for an internal combustion engine-powered tool includes a single use container accommodating a predetermined volume of lubricating oil for mixing with a full tank of fuel in a fuel tank of the tool to yield a mixture of fuel and lubricating oil having a predetermined ratio of fuel to lubricating oil. A method for using the system includes steps of: providing a single use container having a predetermined volume of lubricating oil, supplying the predetermined volume of lubricating oil to a fuel tank of the tool, and filling the fuel tank to capacity with fuel such that the fuel mixes with the predetermined volume of lubricating oil and a resulting mixture of fuel and lubricating oil has a predetermined ratio of fuel to lubricating oil.

FIG. 2

EP 1 672 332 A2

**Description**

BACKGROUND OF THE INVENTION

The present invention results fuel and oil mixtures for two-cycle engines, and in particular, to single use oil packets and a method for mixing oil with fuel directly in the fuel tank of a two-cycle engine.

Small two-cycle engines, such as those used in portable tools including chainsaws, leaf blowers and line trimmers, typically require engine oil to be mixed with the fuel provided to the engine. The typical method of mixing fuel and oil requires precise measurements and the of more than one fuel container.

Typically, two-cycle lubricating oil is available in small bottles containing the precise amount of oil necessary for mixing with one gallon of gasoline to provide a particular fuel-to-oil ratio, which is printed on the bottles. Normally, the oil is added to a one gallon fuel container and then the container is topped off with pure gasoline or other fuel, often from an additional fuel container.

If the consumer does not have a one gallon fuel container available, the appropriate amount of oil and fuel must be manually calculated and measured to arrive at the correct fuel-to-oil ratio. Further, if the oil bottle designed for providing one ratio (e.g., 40:1) and the engine requires a different ratio (e.g., 50:1), the consumer must attempt to calculate how much more or less oil to add to the fuel to arrive at the correct fuel-to-oil ratio.

A further problem is that different two-cycle engine manufacturers specify different fuel-to-oil ratios to use in their engines. Typically, ratios of 25:1, 32:1, 40:1 and 50:1 are used. If the consumer has more than one two-cycle engine powered tools made by different manufacturers, it may be necessary to keep one fuel container for each different tool. A further container may be necessary to keep pure gasoline for mixing with oil and for use in a four-cycle lawnmower or other four cycle-engine powered tool. As a result, the consumer may have to have as many as five separate fuel containers.

Additionally, all of the above-mentioned issues can be very confusing to the consumer, resulting in mistakes being made. For example, either too much or too little lubricating oil may be provided in the fuel for a particular tool, resulting in premature wear, gumming of engine parts, excess smoke, damage to the engine or other problems potentially contributing to engine failure. Likewise, fuel having oil mixed in may be inadvertently used in a four-cycle engine causing similar and potentially very serious engine problems.

BRIEF SUMMARY OF THE INVENTION

According to an aspect of the present invention, a fuel and oil mixing system for an internal combustion engine-powered tool comprises: a predetermined volume of lubricating oil for mixing with a full tank of fuel in a fuel tank of the tool to yield a mixture of fuel and lubricating oil having a predetermined ratio of fuel to lubricating oil; and a single use container for accommodating said predetermined volume of lubricating oil.

According to a further aspect of the present invention, an internal combustion engine powered tool having a fuel and oil mixing system comprises: an internal combustion engine operating on a mixture of fuel and oil having a predetermined ratio of fuel to lubricating oil, R; a fuel tank in fluid communication with the internal combustion engine, said fuel tank having a fuel capacity, $V_c$; a predetermined volume of lubricating oil, $V_o$, such that the following equation is satisfied: $R = \frac{V_c - V_o}{V_o}$; and a single use container enclosing said predetermined volume of lubricating oil, $V_o$.

According to a still further aspect of the present invention, a method for providing a fuel and oil mixture to an internal combustion engine-powered tool comprises steps of: providing a single use container having a predetermined volume of lubricating oil; supplying the predetermined volume of lubricating oil to a fuel tank of the tool; and filling the fuel tank to capacity with fuel such that the fuel mixes with the predetermined volume of lubricating oil and a resulting mixture of fuel and lubricating oil has a predetermined ratio of fuel to lubricating oil.

BRIEF SUMMARY OF THE DRAWINGS

FIG. 1 is a front perspective view of a single use packet of lubricating oil according to an embodiment of the present invention; and
FIG. 2 is a rear perspective view of the single use packet of FIG 1.

DETAILED DESCRIPTION OF THE INVENTION

According to the present invention, a predetermined volume of lubricating oil for a two-cycle engine is packaged in a container or packet that provides the proper mixture ratio for a single tank of fuel or gasoline. This volume of oil can be poured directly into a fuel tank of a two-cycle engine provided in a particular tool. The volume of oil is calculated, based on the fuel tank capacity, to produce a mixture having the required or recommended fuel to oil ratio, such as 25:1, 32:1, 40:1, 50:1 or the like. Since most such tools have fuel capacities of less than one gallon, prior art oil packages are not sufficient for this purpose. After the oil is added directly to the fuel tank, the fuel tank can then be "topped off" with gasoline, or other suitable fuel. Alternatively, the gasoline can be added first and then the oil. In this case, when adding the fuel to the fuel tank, the correct amount of space must be left for the oil.

Once both oil and gasoline have been placed in the fuel tank, they will mix and provide the proper amount of oil for lubricating the engine and the proper amount of fuel for the combustion process. Since the oil can be added directly to the fuel tank, it is not necessary to provide a separate container for mixing.

For example, a fuel tank for a particular chainsaw holds 15.8 fluid ounces. The engine of this chainsaw requires 40 parts fuel for every one part lubrication oil (i.e., 40:1 fuel to oil ratio). Consider the equation,

$$R = \frac{V_c - V_o}{V_o},$$

where R is the fuel to oil ratio, $V_c$ is the fuel capacity of the chainsaw, and $V_o$ is the volume of oil. Solving for $V_o$, the equation becomes:

$$V_o = \frac{V_c}{R+1}.$$

Applying this equation to the specifications of the chainsaw, the volume of oil that must be provided in the single use packet is 0.34 fluid ounces. When 15.46 fluid ounces of gasoline is added to the oil in the fuel tank to fill the tank to its 16 fluid ounce capacity, the fuel to oil ratio of the resulting mixture is 40:1.

In another example, a line trimmer has a 17.6 fluid ounce fuel tank and also requires a fuel to oil ratio of 40:1. A single use packet containing 0.43 fluid ounces of lubricating oil will be provided to mix with 17.17 fluid ounces of gasoline.

Using the above equations, single use oil packets can be produced for a fuel tank of any capacity to provide any required fuel to oil ratio. Various types of single use containers, including packets, pouches, bottles, cans, and the like can be used according to the present invention.

It should be appreciated that some four cycle engines are designed to run on a fuel and oil mixture. The present invention can be used with such four cycle engines.

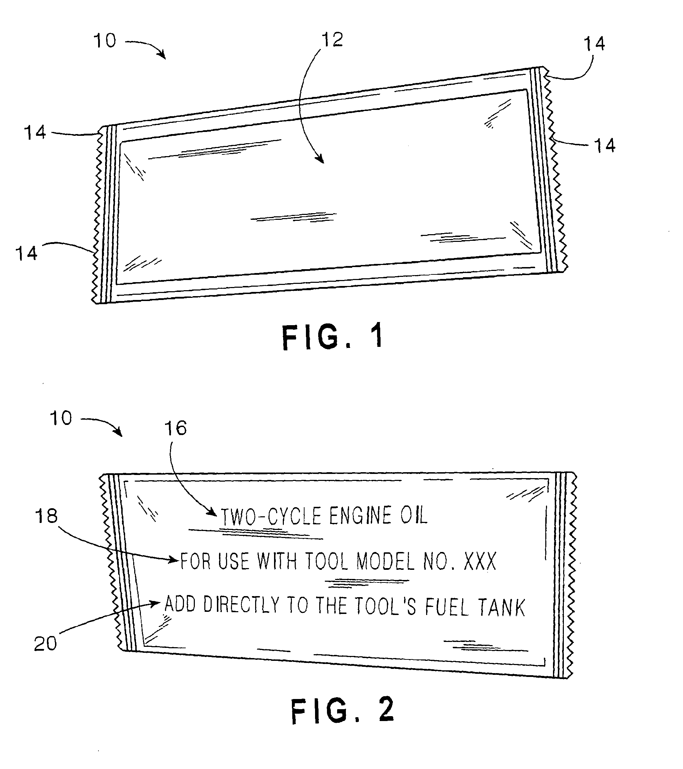

As shown in FIGS. 1 and 2, a single use oil packet 10 is provided according to an embodiment of the present invention. The packet 10 is constructed of a two layers or sheets made of a flexible polymer film that are heat-welded, or otherwise bonded, at their perimeter. A predetermined volume of two cycle lubricating oil 12 is provided in the nonwelded space between the two layers. The oil is visible through the transparent top layer of the packet 10 in FIG. 1. A series of chevron-shaped cuts 14 are provided at two opposing ends of the packet 10, in order to allow the packet 10 to be easily opened by tearing, thereby destroying the packet 10. Other means for destructively opening the package can be provided, such as precutting a slit part-way through a seam of the packet or by instructing the end user to cut the packet open with a cutting tool. Although a resealable package can be used according to the present invention, it is generally unnecessary, since the entire contents of the package will be emptied into the fuel tank once the package is opened.

As shown in FIG. 2, an opaque layer of the packet 10 can be marked with indications including its contents 16, the particular tool 18 for which the packet 10 is designed, instructions for use 20, and the like. Optionally, these indications can be provided on an outer package, a package insert or other appropriate location. Providing a clear identification of the tool 18 helps to insure that the correct packet, and thus the correct amount of oil, is added to the fuel tank of a tool.

It should be evident that this disclosure is by way of example and that various changes may be made by adding, modifying or eliminating details without departing from the fair scope of the teaching contained in this disclosure. The invention is therefore not limited to particular details of this disclosure except to the extent that the following claims are necessarily so limited.

## Claims

1. A fuel and oil mixing system for an internal combustion engine-powered tool, the system comprising:

    a predetermined volume of lubricating oil for mixing with a full tank of fuel in a fuel tank of the tool to yield a mixture of fuel and lubricating oil having a predetermined ratio of fuel to lubricating oil; and
    a single use container for accommodating said predetermined volume of lubricating oil.

2. The fuel and oil mixing system of claim 1, wherein the predetermined ratio of fuel to lubricating oil is selected from the group consisting of 25:1, 32:1, 40:1 and 50:1.

3. The fuel and oil mixing system of claim 1, wherein the single use container comprises first and second flexible sheets, a perimeter of the first sheet being bonded to a perimeter of the second sheet.

4. The fuel and oil mixing system of claim 1, wherein the single use container further comprises means for destructively opening the single use container.

5. The fuel and oil mixing system of claim 1, wherein the lubricating oil is two cycle engine lubricating oil.

6. A fuel and oil mixing system for an internal combustion engine-powered tool, the system comprising:

    a predetermined volume of lubricating oil; and
    means for providing said predetermined volume of lubricating oil to a fuel tank of the tool such that when the fuel tank is full, a resultant mixture of fuel and lubricating oil has a predetermined ratio of fuel to lubricating oil.

7. The fuel and oil mixing system of claim 6, wherein the predetermined fuel to lubricating oil ratio is selected from the group consisting of 25:1, 32:1, 40:1 and 50:1.

8. The fuel and oil mixing system of claim 6, wherein the means for providing said predetermined volume of lubricating oil comprises a single use container.

9. The fuel and oil mixing system of claim 8, wherein the single use container comprises first and second flexible sheets, a perimeter of the first sheet being bonded to a perimeter of the second sheet.

10. The fuel and oil mixing system of claim 8, wherein the single use container further comprises means for destructively opening the single use container.

11. The fuel and oil mixing system of claim 6, wherein the lubricating oil is two cycle engine lubricating oil.

12. An internal combustion engine powered tool having a fuel and oil mixing system, the tool comprising:

an internal combustion engine operating on a mixture of fuel and oil having a predetermined ratio of fuel to lubricating oil, R;
a fuel tank in fluid communication with the internal combustion engine, said fuel tank having a fuel capacity, $V_C$;
a predetermined volume of lubricating oil, $V_O$, such that the following equation is satisfied:

$$R = \frac{V_c - V_o}{V_o};$$

and
a single use container enclosing said predetermined volume of lubricating oil, $V_O$.

13. The internal combustion engine-powered tool of claim 12, wherein the predetermined ratio of fuel to lubricating oil is selected from the group consisting of 25:1, 32:1, 40:1 and 50:1.

14. The internal combustion engine-powered tool of claim 12, wherein the fuel capacity, $V_C$, of the fuel tank is not equal to one gallon.

15. The internal combustion engine-powered tool of claim 12, wherein the fuel capacity, $V_C$, of the fuel tank is less than one gallon.

16. The internal combustion engine-powered tool of claim 12, wherein the single use container comprises first and second flexible sheets, a perimeter of the first sheet being bonded to a perimeter of the second sheet.

17. The internal combustion engine-powered tool of claim 12, wherein the single use container further comprises means for destructively opening the single use container.

18. The internal combustion engine-powered tool of claim 12, wherein the lubricating oil is two cycle engine lubricating oil.

19. A method for providing a fuel and oil mixture to an internal combustion engine powered tool comprising steps of:

providing a single use container having a predetermined volume of lubricating oil;
supplying the predetermined volume of lubricating oil to a fuel tank of the tool; and
filling the fuel tank to capacity with fuel such that the fuel mixes with the predetermined volume of lubricating oil and a resulting mixture of fuel and lubricating oil has a predetermined ratio of fuel to lubricating oil.

20. The method of claim 19, wherein the predetermined ratio of fuel to lubricating oil is selected from the group consisting of 25:1, 32:1, 40:1 and 50:1.

21. The method of claim 19, wherein the single use container comprises first and second flexible sheets, a perimeter of the first sheet being bonded to a perimeter of the second sheet.

22. The method of claim 19, wherein the single use container further comprises means for destructively opening the single use container.

23. The method of claim 19, wherein the lubricating oil is two cycle engine lubricating oil.

FIG. 1

TWO-CYCLE ENGINE OIL

FOR USE WITH TOOL MODEL NO. XXX

ADD DIRECTLY TO THE TOOL'S FUEL TANK

FIG. 2